(19) Europäisches Patentamt
European Patent Office
Office européen des brevets

(11) EP 3 614 341 A1

(12) EUROPEAN PATENT APPLICATION

(43) Date of publication:
26.02.2020 Bulletin 2020/09

(51) Int Cl.:
G06T 7/55 (2017.01)

(21) Application number: 18190587.8

(22) Date of filing: 23.08.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: ETH Zurich
8092 Zurich (CH)

(72) Inventors:
• HILLIGES, Otmar
8032 Zürich (CH)
• NÄGELI, Tobias
8055 Zürich (CH)

(54) APPARATUS, METHOD AND COMPUTER PROGRAM FOR DETECTING THE FORM OF A DEFORMABLE OBJECT

(57) Apparatus for detecting the form of a deformable object (4), the apparatus comprising at least two drones (1, 1') and a processing apparatus (2), wherein each of the at least two drones (1, 1') comprises a camera (3) for iteratively capturing in an iteration step an image of the deformable object (4), wherein the processing apparatus (2) is configured to estimate iteratively the form of the deformable object (4) by performing in the iteration step the following the steps:

detecting image positions of detection points (5) of the deformable object (4) in an image of the deformable object (4) captured in the current iteration step by each camera (3),

estimating a pose state of the current iteration step based on the image positions of the detection points (5) detected in each of the images received in the current iteration step, wherein the pose state of the current iteration step comprises three-dimensional positions of the detection points (5) in a detection coordinate system (7) in the current iteration step and parameters of the drones (1, 1') and/or of the cameras (3) defining the position and orientation of the cameras (3) in the detection coordinate system (7) in the current iteration step, wherein the three-dimensional positions of the detection points (5) in the current iteration step define the form of the object in the current iteration step, and

controlling the drones (1, 1') based on the pose state of the current iteration step such that the drones (1,1') follow the object (4) and/or such that the cameras (3) of the drones (1,1') keep the object (4) in its images and/or such that the number of detection points (5) visible in the images are maximised

Fig. 1

**Description**

Field of the invention

The invention refers to the detection, estimation or determination of the form of a deformable object, e.g. the pose of a human.

Description of related art

Many graphics applications such as character animation for games, sports, biomechanics, VR, and AR rely on accurate human pose information, and virtually every modern movie production leverages Motion Capture (Mocap) systems for special effects. Most commonly, such systems are camera based, either relying on body-worn markers, or more recently even work markerless. Multi-view approaches can now be highly accurate and sometimes provide dense surface reconstructions. The maturing of camera-based motion capture technology in turn leads to a desire to use it in increasingly challenging scenarios such as with fast moving actors, large scale scenes and even in outdoors settings. However, all existing approaches require a set of environment-mounted, accurately calibrated cameras looking into a capture area of fixed size. This requirement for stationary cameras makes application in these settings very tedious, costly and sometimes entirely infeasible.

An alternative solution is to mount a plurality of inertial measurement units (IMUs) on the body. The detection of the movement of the plurality of IMUs results in the pose detection. IMU solutions have the advantage of being mobile. However, the accumulation of small detection errors could lead over longer detection periods to larger errors in the pose detection. In addition, IMU based solutions require user instrumentation. They also rely on sophisticated models of the human and hence cannot easily be generalized to other subjects.

Outside the human pose estimation, the following state of the art is known:

Rui Li, Minjian Pang, Cong Zhao, Guyue Zhou and Lu Fang published 2016 the article "Monocular long-term target following on uavs" in Proceedings of the IEEE Conference on Computer Vision and Pattern Recognition Workshops, 29-37. It discloses a way to recover the 3D trajectory of a moving person from one micro arial vehicle (MAV) with a camera following and filming the person. However, this does not allow to track or determine the pose of the human.

Also multi-robot teams are known, including groups of aerial robots like MAVs. To stabilize a formation, each agent requires exact positional knowledge. Existing approaches to formation flight therefore rely either on low precision sensors, which result in large inter-robot distances, or on external infrastructure. Methods for infrastructure-free formation control have been proposed albeit requiring the cameras to be trained on the other members of the swarm, rendering it unsuitable for subject tracking.

Brief summary of the invention

It is an object of the invention to improve the methods of the state of the art of tracking, estimating or determining the form of a deformable object, e.g. the pose of a moving person. Preferably, the method should be infrastructure-free.

This object is solved by the independent claims. The use of multiple drones with cameras allow to make the tracking of a moving deformable object in an infrastructure-free way. The drones follow the object wherever to the object moves and the multiple camera views from the drones on the object allow a tracking of the form of the object. The joint estimation of the three-dimensional positions of the detection points and of the parameters of the drones and/or of the cameras defining the position and orientation of the cameras (and thus the image content) allows to obtain high quality estimates of all or at least most of the parameters of the drones and/or of the cameras. This allows a very precise drone control without the necessity of highly precise drone position sensors.

The dependent claims refer to further advantageous embodiments of the invention.

In one embodiment, the pose state (or any other state to be determined) of the current iteration step is estimated based on the pose state (or the other state) of a previous iteration step. Preferably, this is done by a Kalman filter. This solution is very resource efficient, allows a detection in real time and is very robust and reliable.

In one embodiment, the pose state comprises further the orientations of each drone and/or, if the cameras are movable in the drones, the orientation of the camera of each drone with respect to the respective drone.

In one embodiment, the (assumed constant) distances between connected detection points of the object are used for estimating the pose state.

In one embodiment, a distance state comprises a set of distances defining the distances between connected detection points, wherein the distance state is estimated based on the pose state of the current or previous state and/or based on the distance state of the previous iteration step. This allows to estimate the (preferably constant, but unknown) distances between the detection points.

In one embodiment, a control state comprises further control parameters of the drones which do not influence the image of the camera of each drone, wherein the control state is estimated based on the control state of the previous state, wherein the control state comprises preferably the velocity of each drone, wherein the drones are further controlled based on the control state of the current iteration step. This has the advantage that all control parameters of the drones for the drone control are estimated.

In one embodiment, the pose state is estimated with a first Kalman filter and the distance state and/or control state is estimated with a second Kalman filter and/or third Kalman filter being separate from the first Kalman filter. Preferably, the estimated distance states of the second Kalman filter is used as input for the first Kalman filter and/or the estimated pose states (at least some of them) of the first Kalman filter is used as input for the second Kalman filter. This approach reduces the dimension of the two and/or three Kalman filters for the pose and the distance and/or control state compared to one joint Kalman filter for a joint state including the pose and distance and/or control state. Since the computational effort of the Kalman filter is cubic with respect to the dimension, this makes the estimation computationally much more efficient. Therefore, this is very advantageous for embodiments with many detection points, many drones and/or many drone parameters.

In one alternative embodiment, the pose state and the distance state and/or the control state define a joint state, wherein the joint state of the current iteration step is estimated with a Kalman filter based on the joint state of the previous iteration step.

In one embodiment, the origin of the detection coordinate system moves with one of the at least two drones or with a point defined by two or more of the at least two drones. In the latter embodiment, the detection coordinate system is for example the centre of gravity of all drones. However preferably, one of the at least two drones is defined as a lead drone and the at least one other drone is defined as at least one secondary drone, wherein the detection coordinate system corresponds to the coordinate system of the lead drone. This seems in the beginning negative, because the absolute position information, i.e. the trajectory of the object in a global coordinate system is lost. However, since the coordinate system of the estimated states moves with the object, the detection errors do not accumulate over time as with pose detection based on IMUs. This allows to estimate the relative positions between the detection points and their relative position with respect to the lead drone with significant lower estimation error. This allows a high quality drone control, even if the cameras are directed towards the object (and not versus the other drones).

In one embodiment, the lead drone comprises a sensor for detecting the movement of the lead drone between the previous iteration step and the current iteration step. Preferably, the pose state of the previous iteration step is corrected based on the detected movement of the lead drone to obtain a corrected pose state of the previous iteration step, wherein the pose state of the current iteration step is estimated based on the image positions of the received images of the current iteration and based on the corrected pose state of the previous iteration step. Preferably, at least the three-dimensional positions of the secondary drones of the previous iteration step and the three-dimensional positions of the detection points are corrected in the pose state based on the detected movement of the lead drone to obtain a corrected pose state of the previous iteration step. The correction of at least some states which are influenced by the displacement of the lead drone by a displacement measured by a sensor (in the lead drone) allows to use iterative estimation methods based on the states of the previous iteration step.

In one embodiment, the covariance matrix of the pose state of the previous iteration step is corrected by the displacement covariance matrix which is based on the variance of the movement of the sensor (of the current step), wherein the pose state of the current iteration step is estimated further based on the corrected covariance matrix of the pose state of the previous iteration step. Preferably, the displacement covariance matrix corresponds to a diagonal matrix whose diagonal entries of state dimensions which have been corrected by the displacement of the lead drone correspond to the variance of the displacement and/or whose diagonal entries of state dimensions which have not been corrected by the displacement of the lead drone correspond to zero.

In one embodiment, the variance of the position of the lead drone in the covariance matrix of the pose state of the previous iteration step is set to zero such that the position of the lead drone remains fixed.

In one embodiment, the detection points are markers attached or worn by the moving deformable object. This has the advantage that the detection of the form of the object is independent of a model of the object.

Brief Description of the Drawings

The invention will be better understood with the aid of the description of an embodiment given by way of example and illustrated by the figures, in which:

Fig. 1 shows an embodiment of an apparatus for detecting the form of a deformable object.

Fig. 2 shows an embodiment of a method for detecting the form of a deformable object.

Detailed Description of possible embodiments of the Invention

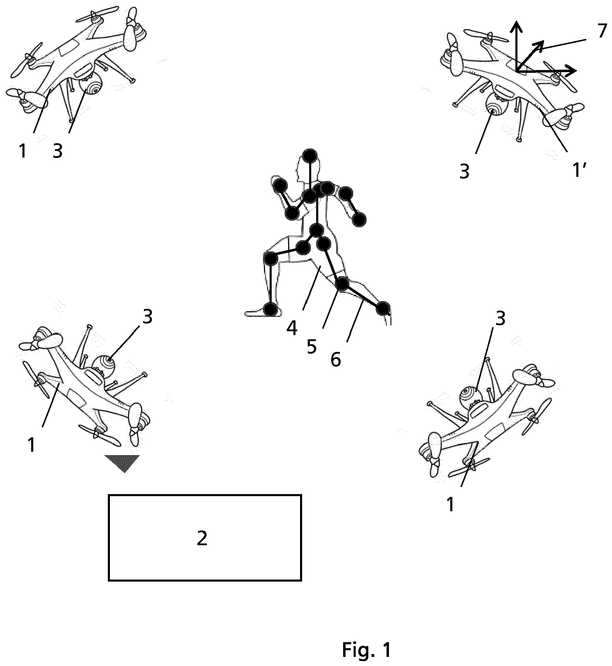

Fig. 1 shows an embodiment of an apparatus or system for detecting the form of a moving deformable object.

The object 4 is preferably a human, a human-like robot or an animal. However, the object can be also another deformable object 4. In the following description of an embodiment, the invention will be explained at the example of a human 4 without any limitation of the invention. The human 4 can be replaced by any other deformable object 4.

The form of the object 4 is defined by a (relative) position of a plurality of detection points of the object. The detection points 5 are preferably markers which are applied on the object 4. The markers 5 can be lights (visible, ultraviolet (UV), infrared (IR) and/or in other frequency bands). The light can be actively emitting like a light emitting diode (LED) or be passive like a reflector. The lights can blink with a frequency, preferably each light blinks with a different frequency to be better detectable or identifiable. However, the marker 5 could be also a simple colour marker. The detection point 5 can also be detected by image recognition or other means and/or without a marker, maybe based on a model of the object. In the following described embodiment, all detection points 5 are called markers without any limitation of the invention. Obviously, the markers can be replaced by other detection points 5. For objects 4, whose form is changed by joints (like human, human-like robot or animal), the detection points 5 correspond preferably to positions of joints of the object 4. The plurality of detection points 5 model or define the form of the object 4. The number of the detection points 5 is in the following abbreviated by m. Preferably, the m detection points 5 are different from each other such that they are identifiable in an image. Preferably, the object 4 is such that at least some, preferably each detection point 5 has at least one connected neighbouring detection point 5 with a constant distance. For a human, a human-like robot or an animal, neighbouring detection points 5 or joints are connected via a bone 6 with constant length. In the following described embodiment, all detection points 5 are connected by bones 6 without any limitation of the invention. Obviously, the bones 6 can be replaced by other connections 6 with constant length and maybe even with variable length. The form of the (deformable object 4) like the human, the human like robot or the animal is also called (form) pose and describes the state of his/her/its joints. This (form) pose of the deformable object is well to be distinguished from the (position) pose of the drone referring to the position and orientation of the drone.

The apparatus or system comprises a plurality of drones 1 and a processing apparatus 2 (which can be also called processing means or processor or processing device). The number of drones 1, 1' is in the following defined as n.

The drones 1, 1' are configured to fly with a remote control (from the processing apparatus 2). The drones 1, 1' are preferably an MAV. The drones 1, 1' are preferably rotorcrafts. This allows them also to move slowly and quickly changing direction and orientation. Preferably, each drone 1, 1' comprises a plurality of rotors (with parallel rotor axes). In the shown embodiment, the drones 1, 1' are quadrotors, i.e. having four rotors. In the following described embodiment, the drones 1, 1' are quadrotors without any limitation of the invention. Obviously, the quadrotors 1, 1' can be replaced by any other type of drones 1, 1'. Each drone 1, 1' can be controlled as described in more detail later such to follow the moving deformable object and/or to maintain a certain distance from the other drones 1, 1'.

Thus, the moving deformable object 4 can move in any environment described by a global coordinate system. The drones 1, 1' follow the object 4 in the environment or the global coordinate system. Each drone 1, 1' defines a drone coordinate system in which the drone 1,1' does not move.

Each drone 1, 1' comprises a camera 3 configured to take an image (or picture) of the movable deformable object 4 and/or of the detection points 5.

The camera 3 is preferably a digital camera, i.e. a camera with a digital image sensor recording the image projected from the environment into the camera. If the detection points 5 are markers, the camera 3 is preferably configured to record the marker points. Preferably the camera 3 is configured to record light at least in at least one light wavelength of the markers. For example, if the marker is an UV, visible or IR marker, the camera 3 should be configured to record UV, visible or IR light respectively. The camera 3 is preferably configured to record light. The camera 3 is preferably configured to record light in the visible spectrum. However, it is also possible that the camera 3 in addition or alternatively records light in other spectra. The camera 3 can also be of any other type, for example a time of flight camera.

In one embodiment, the camera 3 has at least one camera parameter which can be changed (by the remote control). The camera parameter is configured such that a change of the camera parameter causes a change of the image seen/taken by the camera 3. In one embodiment, the at least one camera parameter comprises the (rotational and/or translational) camera position. In one embodiment, the camera position comprises a rotational position, preferably comprising pitch and/or yaw of the camera 3 with respect to the drone coordinate system. Additionally or alternatively, the camera position can comprise a translation of the camera 3. A change of the camera position causes a change of the image seen/taken by the camera 3. Preferably, the camera 3 is arranged in a movable fashion on the drone 1, 1' such that the camera axis of the camera 3 can be moved with respect to the drone 1, 1' and/or the drone coordinate system. In this case, the camera coordinate system is movable with respect to the drone coordinate system depending on the applied camera position. In the subsequently described embodiment, the camera 3 can be rotated (around pitch and yaw). The camera parameter can also comprise other parameter which change the image seen/taken by the camera 3 like the focus/zoom or others. In the subsequently described embodiment, the camera parameters are pitch and yaw without any limitation of the invention. Obviously, pitch and yaw can be replaced or completed by any other camera parameter. However, it is also possible that the camera 3 has no camera parameter, i.e. the image of the camera 3 cannot be changed by the remote control except by a movement of the drone (positional) pose, i.e. its position and/or orientation. A pose state vector (shortly pose state) comprises preferably the camera parameter (or more exactly comprises an estimate of the camera parameter).

Each image taken by the camera 3 is described with an image coordinate system describing the positions within the image of the camera 3 (image position). The image coordinate system could for example correspond to the pixel coordinates of the image. The image coordinate system is preferably two-dimensional and/or lies preferably in the image plane of the camera 3 in the camera coordinate system. The image is preferably the projection of the three-dimensional object 4 on the (two-dimensional) image plane and/or the image coordinate system.

The camera 3 is configured to take at least one (full) image in each iteration step described later. The camera 3 is preferably configured to take at least 5 images per second (>5Hz), preferably at least 10 images per second (>10Hz), preferably at least 15 images per second (>15Hz), preferably at least 20 images per second (>20Hz), preferably at least 25 images per second (>25Hz).

In one embodiment, the drones 1, 1' comprise one lead drone 1' and at least one secondary drone 1.

The lead drone 1' comprises displacement sensor (not shown in Fig. 1) for detecting the displacement of the lead drone 1' in the environment and/or in the global coordinate system. Preferably, this sensor comprises an accelerometer (for detecting a translation of the lead drone 1'), a gyroscope (for detecting a rotation of the lead drone 1'), a magnetometer (for detecting a reference for the rotation of the lead drone 1') and/or an IMU (for detecting a translation and a rotation of the lead drone 1'). Preferably, this sensor comprises alternatively or additionally a optical flow sensor which detects the displacement of the lead drone 1' based on a drone mounted camera mounted on the lead drone 1'. Preferably, this drone mounted camera is a camera directed to the ground, e.g. in the direction of the rotor axis. However, it is also possible to use the camera 3 of the lead drone as drone mounted camera. The displacement sensor can also comprise a position sensor which allows to determine the displacement from the difference of the positions. Obviously, all other kind of displacement sensors is possible. The lead drone 1' sends the determined displacement or raw data allowing to determine the displacement to the processing apparatus 2, preferably (wirelessly) to the processing device. In a less preferred embodiment, the displacement sensor can also be arranged outside of the lead drone 1'.

Preferably, the lead drone 1' comprises further a position sensor configured to detect the absolute position of the lead drone 1' with respect to the global coordinate system and/or in the environment. The lead drone 1' sends the determined position to the processing apparatus 2, preferably (wirelessly) to the processing device.

Preferably, a detection coordinate system corresponds to the coordinate system of the lead drone 1', i.e. the origin of detection coordinate system and of the coordinate system of the lead drone 1' are equal or have a fixed or constant spacial relationship. The detection coordinate system will be described in more detail below.

In an alternative embodiment, the detection coordinate system could also be defined by two or more of the at least two drones 1, 1', in particular by their positions. For example, the origin of the detection coordinate system could be the centre of gravity of the two or more or all of the at least two drones 1, 1'.

The processing apparatus 2 is configured to estimating the form of the object based on the images taken by the at least two drones 1, 1'.

The processing apparatus 2 is any processing means configured to perform the subsequently described steps to estimate the form of the object based on the images taken by the at least two drones 1, 1'. Preferably, the processing apparatus 2 is a processing device separate from the drones 1, 1' which communicates with the drones 1,1'. Preferably, the communication connection between the drones 1, 1' and the processing device is via radio link. The processing device can be stationary, moving on an earth-bound vehicle or even flying in the environment and/or the global coordinate system. The processing device can comprise multiple sub-processing devices for processing different functions. Preferably, each drone 1, 1' sends the images taken to the processing device and/or the processing device sends the drone control parameter to the drones 1, 1'. This has the advantage that standard drones 1, 1' can be used and the complete processing is done in the processing device. However, it is also possible that the processing apparatus comprises processing resources in the drones 1, 1' and in the processing device, i.e. a part of the processing is done in the drones 1, 1', preferably some pre-processing steps. This has the advantage that some processing steps (with reduced computational effort and/or not depending on data from the other drones) can already be processed by the processing resources on the respective drone. This reduces the computational effort for the processing device and might reduce the data sent wirelessly (over the radio link) to the processing device. For example, instead of sending the complete images, it is sufficient to send just the image positions of the detection points to the processing device. It is further possible that the complete processing is performed in the processing resources in the drones 1, 1'.

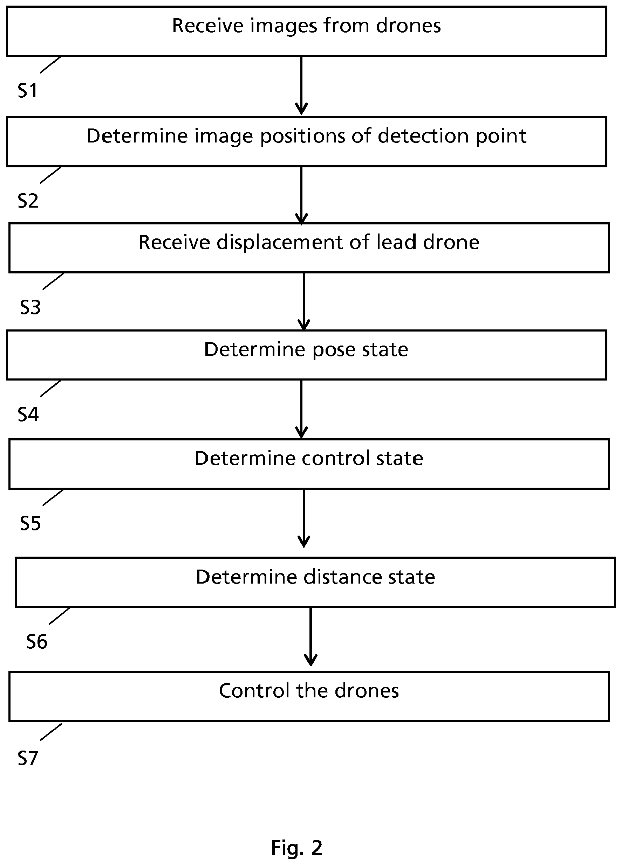

The processing apparatus 2 is configured to estimating the form of the object based on an iterative approach. The processing apparatus 2 performs in each iteration step the following steps illustrated exemplarily in Fig. 2.

In each iteration step, the camera 3 of each drone 1, 1' takes at least one image. Preferably, the camera 3 of each drone 1, 1' is controlled by the processing apparatus 2 to be in a video mode to periodically record images. The iteration step is preferably chosen on the basis of the frequency with which the camera 3 takes images in the video mode. However, it is also possible to select the iteration step such that more than one image is taken in each iteration step.

The processing apparatus 2 receives then in step S1 the n images from the m drones 1, 1'.

In step S2, for each of the m images, all detection points 5 which are visible in the respective image are detected in the image. This results for each image in a number (<=m) of image positions of the detection points 5 detected in the image. Preferably, the detection points 5 are identified such that it is known which detection point 5 in the image corresponds to which detection point 5 of the object 4. Preferably, an observation state vector (short observation state) is created based on the m*n image positions of the m detection points in the n images.

In each iteration step, the lead drone 1, 1' measures with the displacement sensor its displacement from the previous iteration step to the current iteration step. In step S3, the displacement forms the displacement sensor is received in the processing apparatus 2 from the lead drone 1, 1' or the sensor.

Before the following steps are described, some terminology shall be introduced which is used for the following embodiment without limiting the invention to it.

We define the term pose state (vector) as the three-dimensional positions of the detection points 5 (defining the joint-angle configuration of the human) together with camera parameter (also called the camera state or camera pose). If we talk about a specific pose, we specify this by writing Camera Pose (position and orientation of the cameras 3 in the detection coordinate system) or Human Pose (the three-dimensional positions of the detection points 5). We call all quadrotors 1, 1' together a swarm. The swarm together with the human is denoted as a formation.

The following coordinate frames are used in here: W-the inertial world frame; O - the origin frame; $A_j$ - anchor frames; C - the camera frame; I -the IMU frame. The term frame and coordinate system are used interchangeably.

We follow the standard notation proposed in literature. Translation vectors between two frames A and B, expressed in frame A, are denoted by $t_{AB}$ Rotation matrices performing rotations from frame A to frame B are denoted by

$$\mathbf{R}_{BA} = \mathbf{R}(\bar{q}_{BA}) \in SO(3),$$

where $q_{BA}$ is the corresponding quaternion. We adhere to the JPL quaternion definition and denote a quaternion by

$$\bar{q} = \left[ q_x \mathbf{i} + q_y \mathbf{j} + q_z \mathbf{k} + q_w \right] = [\mathbf{q}, q_w]^T.$$

Quaternion multiplication is denoted by $\otimes$

Expected or estimated values of a variable x are denoted by E [x] = x^, errors are written as $\delta x$. Orientation errors are described in so (3), the tangent space of SO(3), and are written as $\delta\theta$. Measurements of a quantity x affected by white Gaussian noise are written as z = x + $\nu$ with $\nu \sim N(\sigma)$. Due to the many degrees-of-freedom of the problem discussed in this paper, the resulting notation is rather verbose.

In various parts of the algorithm, state estimates are changed from one value to another, where the new value is often a function of the previous state estimate. We denote the update of a variable with an arrow $\leftarrow$. For example, incrementing a variable x by 1 is written x$\leftarrow$x+1.

States x refer to state space vectors. For a given state x, we denote the estimated state as x with a little hat ^, a measurement by its measurement function h(x) and an estimate measurement by h(x) with a little hat ^. Residuals are denoted by $\rho$. We denote points in 3D as p with a name as subscript, e.g. $p_q$ for $p_{quadrotor}$. A relative vector between two points $p_a$ and $p_b$ is denoted as $r_{ab}$. A superscript $r^c_{ab}$ indicates the vector $r_{ab}$ is expressed in frame (or coordinate system) C. Without superscript the vector is expressed in the detection coordinate system I.

The pose of the human is defined by a set of m joints (detection points 5), modelled as 3D points, and their connecting bones 6. The state of all joints is denoted by $x_j$ which contains the position of the m individual joints that define the human pose (or object state):

$$\mathbf{x}_j = \left[ \mathbf{p}_{j_1}, \ldots, \mathbf{p}_{j_m} \right] \in \mathbb{R}^{3m}.$$

All joints are connected by bones 6 of a certain length. We denote with $x_b$ the bone-lengths state vector (or distance state):

$$\mathbf{x}_b = [b_1, \ldots, b_{m-1}] \in \mathbb{R}^{(m-1)}.$$

The bone-lengths (or distances) are assumed to be constant, but unknown, and therefore treated as bias states for which the exact values are estimated online.

We follow the following drone model. We consider n drones 1, 1', each of them equipped with the camera 3. The state of each quadrotor (drone state) is preferably given by its position $p_q \in R^3$, its velocity $dp_p/dt \in R^3$ (or the first derivation of its position over time also noted by a point over the p) and its orientation, i.e. roll $\Phi_q$, pitch $\Theta_q$ and yaw $\psi_q$. For drone i, its camera 3 is attached to the drone 1, 1' with a gimbal of controllable pitch $\theta_g$ and yaw $\Psi_g$. For brevity, we assume the camera position and the quadrotor position to be identical. If it would not be the same, one can be computed by the other by a constant and known value, if the position of the camera 3 is not movable in the drone coordinate system. Otherwise, the camera position in the drone coordinate system could be further added to the drone state.

The state of the quadrotor is given by its position $p_q \in R^3$, its velocity $dp_q/dt \in R^3$ and its orientation in SO(3), i.e. roll $\Phi_q$, pitch $\Theta_q$ and yaw $\Psi_q$. The camera 3 is attached to the robot or drone 1, 1' via a pan-tilt gimbal (this can also be a software gimbal). The state of the camera is given by its position $p_c$ (rigid body transformation from $p_q$), the velocity $p_q$ and the gimbal states $\theta_g$, $\Psi_g$. For ease of explanation we assume $p_q = p_c$. We denote the state of the system, consisting of quadrotor and gimbal, by

The pose state vector of a drone is defined as:

$$\mathbf{x}_d = [\, \text{Quadrotor} \mid \text{Camera} \,] = [\mathbf{p}_q, \dot{\mathbf{p}}_q, \Phi_q, \Theta_q, \psi_q, \theta_g, \psi_g] \in \mathbb{R}^{11}.$$

The drone 1, 1' and/or camera 3 can comprise further control inputs whose change do not influence the image of the camera 3 or which are at least neglectable. In the described example the control state including all control parameters is

$$\mathbf{u} = [v_z, \phi_q, \theta_q, \omega_{\psi_q}, \omega_{\theta_g}, \omega_{\psi_g}] \in \mathbb{R}^6$$

where $v_z$ is the velocity of the drone 1, 1' in the body z-axis (meaning in the direction of the z-axis of the drone coordinate system), $\phi_q$ and $\theta_q$ are the desired roll and pitch angles of the quadrotor 1, 1', respectively, $\omega_{\psi q}$ is the angular speed around the body-z axis and $\omega_{\theta g}$, $\omega_{\psi g}$ are the pitch and yaw rates of the camera gimbal. The horizontal velocities are not directly controlled. We employ a first order low-pass Euler approximation of the quadrotor dynamics, as follows. The translational dynamics are then given

$$\text{by } \dot{\mathbf{p}}_q = [\dot{\mathbf{p}}_{qx,y}, v_z] \text{ and } \ddot{\mathbf{p}}_q = [\ddot{\mathbf{p}}_{qx,y}, 0],$$

with

$$\ddot{\mathbf{p}}_{qx,y} = \mathbf{R}_{\psi_q}(\psi_q) \begin{bmatrix} -tan(\Phi_q) \\ tan(\Theta_q) \end{bmatrix} g - C\dot{\mathbf{p}}_{qx,y},$$

where g= 9.81 m/s^2 is the earth's gravity, $R_{\psi q}$ ($\Psi_q$) $\in$ SO(2) is the rotation matrix only containing the yaw rotation of the quadrotor 1, 1' and C is the drag coefficient at low speeds. The rotational dynamics of the quadrotor are

$$\dot{\Phi}_q = \tau_a(\phi_q - \Phi_q), \quad \dot{\Theta}_q = \tau_a(\theta_q - \Theta_q) \text{ and } \dot{\psi}_q = \omega_{\psi_q},$$

and the gimbal pitch rate is given by

$$\dot{\theta}_g = \omega_{\theta_g}.$$

For optimization it is possible to represent rotations as quaternions to avoid gimbal locking. For instance, the 3D camera orientation is denoted by the quaternion
$\bar{q}c = \bar{q}(\theta_g, \Psi_g) \in SO(3)$ and the orientation of the drone by $\bar{q}_q = \bar{q}(\Phi_q, \Theta_q, \Psi_q) \in SO(3)$.

The presented pose state, distance state and control state can vary depending on the embodiment. For example, if the camera 3 is not movable in the drone 1, 1' or the drone coordinate system, the orientation of the camera 3 roll $\Phi_q$, pitch $\Theta_q$ and yaw $\Psi_q$ could be removed from the pose state. It might be also that drone orientation in the detection coordinate system and the camera orientation in the respective drone coordinate system which are 5 parameters could be replaced directly by the camera orientation in the detection coordinate system (which has only 3 parameters).

The detection coordinate system is according to a preferred embodiment of the invention the coordinate system of the lead drone 1'. This has the advantage that the three-dimensional positions of the detection points 5 and/or of the three-dimensional positions of the drones 1, 1' and/or cameras 3 are only determined relatively to the lead drone 1' and thus do not change so much over time. Thus, the accumulated error over time is significantly reduced. The three-dimensional positions of the detection points 5 and/or of the three-dimensional positions of the drones 1, 1' and/or cameras are in this way only detected relative to the position of the lead drone 1' which however is sufficient for a detection, tracking and/or estimation of the form of the deformable object and/or of the pose of the human (over time). In addition, the absolute position can be easily obtained by the position sensor in the lead drone 1'. Thus, the absolute three-dimensional positions of the detection points 5 and/or of the three-dimensional positions of the drones 1, 1' and/or cameras 3 (in the global coordinate system) can be determined with the determined absolute position of the lead drone 1' in the global coordinate system from the position sensor of the lead drone 1' and the relative three-dimensional positions of the detection points 5 and/or of the three-dimensional positions of the drones 1, 1' and/or cameras 3 in the detection coordinate system. The lead drone coordinate system is preferably used only for the three-dimensional (translational) position space. Preferably, for the orientation coordinates, the global coordinate system is used (e.g. with reference to the magnetic field of the earth). Thus, the detection coordinate system uses the coordinate system of the lead drone 1' for the three-dimensional (translational) position space and the global coordinate system (e.g. fixed with respect to earth magnetic field) for the orientation of the drones 1, 1'. However, it is also possible to use as detection coordinate system also the coordinate system of the lead drone 1' as reference for the orientation of the drones 1, 1' or to use the global coordinate system also for the (translational) positions of the drones 1, 1' and of the detection points 5.

In step S4, the pose state vector (in the following shortly pose state) is determined based on the observation state and/or based on the image positions of the m detection points in the n images.

In step S5, the control state (vector) is determined.

In step S6, the distance state (vector) is determined.

The steps S4 to S6 are described in the following the exemplary embodiment.

Since all robots and the human move dynamically, solving the problem considered here requires the estimation of the full system state, which consists of the drone states and the human state. This leads to a very large state-space of 11n + 3m + (m - 1). In an embodiment with 13 detection points and 2 drones, this results in a dimension of 73. Since the computational cost of a single filter iteration grows cubically with the number of states, a naive implementation would not run in real-time. We leverage two key ideas to reduce the computational cost and render this problem tractable in real-time. (1) We separate the constant, but unknown bias states from the pose state-space. This technique is known as separate-bias or two-stage estimation. (2) We separate the drone states that are not necessary for the human pose estimation, but that have fast dynamics, from the overall state-space in the control state. We refer to these separable states as control states.

Based on concepts (1) and (2), we can structure the state space into three groups: Pose state (vector) comprising the parameters necessary for the human pose estimation, control state (vector) comprising additional states used for quadrotor control (not already included in the pose states) and bias state (vector) for bone lengths that are constant but unknown. The full or joint state space is then:

$$\mathbf{x} = [\underbrace{\text{Cameras, Joints}}_{\text{Pose State}} \mid \underbrace{\text{Quadrotors}}_{\text{Control State}} \mid \underbrace{\text{Bonelength}}_{\text{Bias State}}]$$

$$= [\underbrace{\mathbf{x}_{c_1}, \ldots, \mathbf{x}_{c_n}, \mathbf{x}_j}_{\text{Pose State: } \mathbf{x}_{\text{pose}}} \mid \underbrace{\mathbf{x}_{q_1}, \ldots, \mathbf{x}_{q_n}}_{\text{Control State}} \mid \underbrace{\mathbf{x}_b}_{\text{Bias State}}],$$

As mentioned above, it is computationally very advantageous to divide the state space in three sub-state spaces (pose state space, control state space and bias (or distance) state space) and estimate the sub-states based on a three distinct Kalman filters as described in more detail in the following. However, it would also be possible to estimate the joint or full state by one single Kalman filter if the dimensionality of the embodiment is low and/or the computational resources of the processing apparatus 2 is high.

To solve this problem, we apply an error state Kalman filtering (ESKF) strategy to the pose state estimation. This allows us to circumvent dynamic modelling errors, singularities in the estimation of the covariance matrices of the camera poses and inconsistencies caused by unobservable states. An unobservable state parameter is here for example a detection point 5 which is not visible the image of the camera 3 of a drone 1,1'.

Furthermore, the entire constellation of poses is relative to each other and hence, the solution would be free to drift arbitrarily. For consistency in the estimation, a global position reference for the human-multi-robot team is preferred. To address this issue, we first estimate the global pose of one drone, which sub-sequentially is used as reference frame to express all other poses and feature locations. However, even this reference or lead drone has no access to drift-free positional information and hence a recursive filter would incur in growing uncertainty in the pose estimate. To alleviate this issue, we adopt a robo-centric EKF formulation. In our formulation, the world reference frame and feature locations are expressed with respect to a moving reference frame (detection coordinate system) that is updated to the current estimated leader pose after every filter update. The (unobservable) uncertainty of the absolute camera position, traditionally associated with the current estimate, is now associated with the world reference pose. Linearization is now performed around the low uncertainty current estimate of the camera pose, avoiding accumulation of error.

Since we assume small motion between frames, we can decouple the absolute, yet unknown, pose state $x_{\text{pose}}$ into an estimated prior state and an additional small error state $\delta x_{\text{pose}}$. The prior state $x_{\text{prior}}$ is the a priori estimate of the pose $x_{\text{pose}}$ of the current iteration step using the displacement sensor. The error state $\delta x_{\text{pose}}$ describes the residual between the a priori and the "a posteriori" estimate of the pose state $x_{\text{pose}}$ after fusing prior estimates and camera measurements (i.e. the image positions of the detection points 5).

$$\mathbf{x}_{\text{pose}} := \mathbf{x}_{\text{prior}} \otimes \delta \mathbf{x}_{\text{pose}}. \qquad\qquad \text{Equ. (1)}$$

where $\otimes$ denotes the fusion of the a priori total state and the "a posteriori" error state. Linear quantities are updated additively, while rotational entries are updated multiplicatively. Note that $x_{\text{pose}}$ is the desired quantity we seek to optimize.

Given the above filtering structure, recovering the skeletal configuration of the subject alongside the position of the camera drones now boils down to estimating the Pose state $x_{\text{pose}}$ accurately. This Pose state estimate is then used to compute the control inputs for the swarm for the next iteration step to ensure observability of the human skeleton. We attain this estimate online via recursive estimation, alternating propagation and update steps.

To accurately estimate the human's 3D joint positions, we first need to establish where the cameras are relative to the subject - this itself is in the absence of global positioning an unconstrained problem. To initialize our optimization, we use the sensors of the drones to get an a-priori estimate $x_{\text{prior}}$ of the pose state $x_{\text{pose}}$. We denote by $z_{\text{odo,i}}$ the estimated position of drone i, given by an onboard optical flow estimation algorithm. Note that at this point, none of the drones 1, 1' has any information about the location of the remaining n - 1 drones.

To establish the relative transformations, the transformation requires an absolute position reference. Since the position dynamics of n drones have only $3(n - 1)$ independent degrees of freedom, we require only one absolute position estimate. To approximate this global reference, we pick one drone, which we refer to as the leader drone 1' (or lead drone) and use the associated odometry estimate $z_{\text{odo,i}}$ and the resulting position $p^{k+1}_{q1}$, as global position estimate of the entire constellations. Note that this estimate drifts over time but experimentally we found it to be sufficiently accurate even over long distances and time horizons.

For the camera pose propagation, we assume (4) that all drones and the human are approximately translating with the global frame, defined by the lead camera. For the lead drone 1' we consider that its position estimate is given by its odometry,

$p^{k+1}_{q1} \leftarrow z_{odo,1}$ Drone i=1 (lead drone 1') position propagation.

We can then compute the translation $\Delta$ of the lead drone 1' in one time step (or iteration step) $\Delta := z_{odo1} - p_{q1} = p^{k+1}_{q1} - p_{q1}$.

From assumption (4), the position estimate of the remaining drones 1 (or secondary drones 1) can be initialized by adding the position change $\Delta$ of the lead drone 1' to the latest position estimate. For drone i > 1 (i.e. for the secondary drones 1),

$p_{qi} \leftarrow p_{qi} + \Delta$ Drone i>1 (secondary drone 1) position propagation.

With the correction of the position by the displacement of the lead drone 1' also the covariance matrix of the previous iteration step used for the estimation of the respective state of the current iteration step is updated by the variance of the displacement of the lead drone 1'. We marginalize out the position error covariance of the position dynamics for the lead drone, $Pp_1^{k+1} = 0 \in R^{3\times3}$, and for all remaining drones with i>1 (secondary drones 1), $P_{Pi}^{k+1} = P_{pi}^{k+1} + Q_{pos} \in R^{3\times3}$. The parameter $Q_{pos}$ is a diagonal matrix containing the standard deviation of the expected position change from the initial state, and is a tunable parameter.

For the human pose propagation, again applying assumption (4), the estimated centre of mass of the human is also translated by $\Delta$.

$$\mathbf{x}^{k+1}_j \leftarrow \mathbf{x}_j + \mathbf{\Delta}. \qquad\qquad \text{Eq. (2)}$$

The covariance of the skeletal joints state is then given by $P_j^{k+1} = P_j^k + Q_j$. Qj is again a diagonal matrix containing the standard deviation of the expected position change from the initial state.

After having established an initialization of the positions, we estimate $\delta x_{pose}$ and hence update the pose state $x_{pose}$ using the following measurements: First, the camera measurements comprising the image positions (pixel-coordinates) of the measured marker positions from each camera 3, denoted by $z_j$, wherein j is the identifier for the corresponding marker or detection point 5. Second, the bone-length measurements: denoted by $x_b$, and obtained with the estimated bias state, which we discuss below. The preferably the estimated bias state is the estimate of the from the current iteration step, but could also be the estimate from the previous estimate.

At each iteration step, we receive new camera measurements (images), in our implementation 2D marker positions (image positions) extracted from the images. With these measurements, we perform an update step of the filter. More specifically, we use the pixel measurements of all markers 5 seen by all cameras 3 to minimize the residual between the estimated marker positions 5 and the incoming measurements.

Without loss of generality, but slight abuse of notation, we describe the measurement residual of a joint a seen by camera i. To build the residual $\rho_j$ between the joint measurement and the estimated joint measurement, we project the estimated joint position $p_j \subset x_{prior}$ into the camera frame using the prior camera position $p_q \subset x_{prior}$ and orientation $q\Box_c \subset x_{prior}$. The projection is performed via a standard pinhole camera model. The estimated 2D joint position is then attained via a projection into undistorted pixel coordinates,

$$\mathbf{h}_j(\mathbf{x}_{prior}) = \begin{bmatrix} \mathbf{m}_x f_u + C_u \\ \mathbf{m}_y f_v + C_v \end{bmatrix} \quad \text{with} \quad \mathbf{m} = \frac{1}{\mathbf{r}^c_z}\begin{bmatrix} \mathbf{r}^c_x \\ \mathbf{r}^c_y \end{bmatrix} \qquad \text{Eq. (3)}$$

where $r = p_j - p_q$ is the relative vector between the joint estimate and the camera center, $r^c = R(q_c)r$ is the vector r rotated into the camera frame and $r^c_z$ is the z-component of $r^c$. Pixel coordinates m are computed via the camera intrinsics $f=[f_u,f_v]$ and $C=[C_u, C_v]$. The residual for joint a seen by camera i is then given by

$$\rho_j = v - h_j(x_{prior}) \in R^2, \qquad\qquad \text{Eq. (4)}$$

where $v \subset z_j$ denotes the measurement for joint a and camera i.

For the bone length residual, conceptually, we treat the bone lengths as constant. However, for convenience we include them as measurements affected by zero mean Gaussian noise into our computations.

An individual bone-length prediction can be computed as the Euclidean distance between two adjacent 3D joint positions $p_{ja}$ and $p_{jb}$. It is therefore given by $h_b = \| p_{ja} - p_{jb} \|$. For a single bone i, the bone-length residual $\rho_b$ is then

$$\rho = b_i - h_b(x_{prior}) \in R, \qquad\qquad \text{Eq. (5)}$$

where $b_i \subset x_b$ is the constant, but a-priori unknown, bone-length. We estimate this quantity online, below for details. Intuitively, this residual will ensure that the solution converges to a skeletal configuration in which bones have a constant length. While the physical bone does not change its length at all, this formulation allows for slight variation in relative joint distances. This is due to the difficulties of integrating hard-constraints into recursive filters and due to the fact that the markers and their detections may move relative to the actual joint. Furthermore, this step makes per-user calibration of the system unnecessary.

Finally, the individual residuals are stacked into a single residual vector $\rho = [\rho j, ..., \rho j, \rho b, ..., \rho b]^T$. $\rho$ is then used to update the total state.

To update the total state $x_{pose}$, via Eq. (1), we first compute the error state $\delta x_{pose}$ by performing a Kalman iteration, thus minimizing the residuals $\rho$.

We compute the Kalman gain K with respect to the measurement models $h_j (\cdot)$ and $h_b (\cdot)$, evaluated at the current state estimate. We then compute the Jacobian, denoted by H, of Eq. (4) and Eq. (5) with respect to the error state $\delta x_{pose}$ and linearized around its expected value E [ $\delta x_{pose}$ ] = 0. Note that this step in practice is highly involved and involves computation of derivatives for the quaternions in $x_{pose} \in SO(3)$, with respect to the error state $\delta x_{pose}$.

The a posteriori error state is then computed by

$$\delta x_{pose} = K \, \rho, \qquad\qquad \text{Eq. (6)}$$

and the estimated total state is updated such that the expected error state is once again zero $E[\delta x] = 0$. This allows us to rewrite Eq. (1):

$$x^{k+1}_{pose} = x^k_{pose} \otimes \delta x_{pose} . \qquad\qquad \text{Eq. (7)}$$

To make this nonlinear state estimation problem of a discrete-time stochastic system tractable in real-time, we have posed it as an error-state extended Kalman Filter (EKF), which computes the state estimates as maximum a posteriori (MAP) estimate. The details of the computation of the fusion step are given in the following.

Rotation quaternions have a unit norm constraint $||q || = 1$ and thus have only three degrees of freedom, like any other orientation parameterization. Due to the fact that a quaternion uses 4 dimensions to describe 3 degrees of freedom, a quaternion's covariance matrix is singular. This issue is avoided with the error state or indirect Extended Kalman Filter formulation.

With this formulation, rather than estimating total states, as is the case for the direct Kalman filter, errors are estimated. Thus, we differentiate between the total state x^, and the error state $\delta x$. Usually, the error between two quantities is defined as the arithmetic difference between the two, which is how we define the error in estimated values which are linear, such as positions:

$$\delta x := x - \hat{x}$$

For orientation errors however, the arithmetic difference is not suitable. We define the error of an orientation using an error quaternion $\delta q$, a small rotation between the estimated and true orientation. This error is multiplicative, rather than additive:

$$\bar{q}_{AB} = \delta \bar{q}_{A\hat{A}} \otimes \bar{q}_{\hat{A}B} \quad \Longleftrightarrow \quad \delta \bar{q}_{A\hat{A}} = \bar{q}_{AB} \otimes \left( \bar{q}_{\hat{A}B} \right)^{-1}$$

The error quaternion $\delta q_{AA}$ can be assumed to be small and the small angle approximation can be made

$$\delta \bar{q}_{A\hat{A}} \approx \begin{bmatrix} \frac{1}{2}\delta\theta \\ 1 \end{bmatrix}$$

Using $\delta\theta$ to represent orientations in the Kalman Filter reduces their dimensionality to 3. This is both computationally advantageous and circumvents the issues with a $4 \times 4$ orientation covariance matrix. In the error state EKF, the error state $\delta x$ is the quantity being estimated and the covariance matrix P describes the uncertainty of $\delta$ x. The total state $x^\wedge$ is always updated such that the expected value of the error state $E[\delta x]=0$. In other words, the total state $x^\wedge$ always represents the best estimate of x.

The computed a posteriori error state $\delta x_{pose}$ is thus only a first order approximation of the true error state. The accuracy of the state estimate can be improved by repeatedly performing an update with a single set of measurements, this is known as an iterated state update (ISEKF). Via re-linearization of the measurement equation around the updated state, the IEKF avoids issues with filter convergence, due to accumulated linearization error. The covariance matrix is updated with the standard Kalman Filter equation:

$$\mathbf{P}^{k+1} = (\mathbf{I} - \mathbf{KH})\,\mathbf{P}^{k} \qquad\qquad \text{Eq. (8)}$$

We have now attained an estimate of the joint state of the multi-robot human formation including the desired human pose configuration via optimizing $x_{pose}$.

For the bone length estimation, the bias or distance states $x_b$ remain constant over time, but are unknown a-priori. We use an additional linear Kalman Filter with a zero order state propagation model to estimate the bone length, given the estimated joint positions $p_j \in x_{prior}$. We only perform the filter update of a bone if both corresponding joints $p_{ja}$ and $p_{jb}$ are seen at least by two cameras 3.

In step S7, the drones 1, 1' are controlled such that the drones 1,1' follow the deformable object 4 and/or such that the cameras 3 of the drones 1,1' keep the deformable object 4 in its images and/or such that a maximum number of the detection points 5 remain visible in the n images. The control of the drones 1, 1' is based on the pose state of the current iteration step and eventually also the control state of the current iteration step.

For accurate human pose estimation, we must ensure that the human is always in the field of view of each drone 1, 1' and that each drone 1, 1' in the swarm records the human from a different viewpoint. To achieve this, we build upon the control method defining a N -step finite-horizon constrained non-linear optimization problem at time instant or iteration step k. Note that here we assume known drone and human states, as well as 2D marker positions. These are given by the filter described before and/or by the result of step S4.

Regarding the robot/drone model, to generate correct control inputs, a mathematical model of the drone in form of a non-linear differentiable function

$$f : \mathbb{R}^{n_x \times n_u} \rightarrow \mathbb{R}^{n_x},$$

discretized using a standard forward Euler approach, is needed. The discrete-time state update equation of the drone 1, 1' is

$$\mathbf{x}_d^{k+1} = f(\mathbf{x}_d^{k}, \mathbf{u}^{k}),$$

where $n_x$ is the dimension of the state $x_d \in R^{nx}$, $n_u$ is the dimension of the input $u \in R^{nu}$ and superindex k denotes the discrete time instant or the current iteration step. In an embodiment which includes dynamics of a (software) gimbal, this results in $n_x=11$ and $n_u = 6$.

With this model in place we define a number of cost terms to constrain the camera motion relative to the user.

To ensure that each drone 1, 1' can observe as many of the markers as possible, we ask each drone 1, 1' to keep the bounding box of the detected and labeled marker positions at a desired 2D position on-screen. To the orientation of the human to maximize marker coverage, we control the relative distance to the human via the size of the projected bounding box and the viewing direction of each drone 1, 1' with respect. Via a constant velocity model, we then predict the human states $x_h$ into the future. These include the position ph of the center of the bounding box and its orientation.

Image space locations are controlled via a quadratic error measure $c_i : \mathbb{R}^{\tilde{n}_x + 6} \rightarrow \mathbb{R}_+$ on the residual $\epsilon_m$ of the actual and desired look-at vectors

$$c_\mathrm{i}(\mathbf{x}_\mathrm{pose}) = \|\epsilon_m\|_2 \quad \text{with} \quad \epsilon_m = \frac{\mathbf{r}^c_{ch}}{\|\mathbf{r}^c_{ch}\|} - \frac{\mathbf{r}^c_d}{\|\mathbf{r}^c_d\|},$$

Eq. (9)

where $r^c_{ch}$ is the ray from the camera 3 to the human 4 and $r^c_d = (m_d, 1) \in R^3$ is the vector through the desired screen-space position, where pixel coordinates $m_d$ are computed via the camera intrinsics.

The screen size of the bounding box is controlled via the quadradic error function $c_d : R^7 \to R_+$ on the residual between the actual $\sigma$ and the desired $\sigma_d$ Euclidean distance between the user's position $p_h$, extracted from the $x_h$, and the camera's position $p_q$:

$$c_\mathrm{d}(\mathbf{x}_\mathrm{pose}) = \big\| \|\mathbf{p}_h - \mathbf{p}_q\|_2 - \sigma_d \big\|_2 .$$

Eq. (10)

Similarily, the relative viewing angle per drone is controlled via the quadratic error function $ca : R^{n_x+6} \to R_+$ on the residual $\epsilon_a$ of

$$c_\mathrm{a}(\mathbf{x}_\mathrm{pose}) = \|\epsilon_a\|_2 \quad \text{with} \quad \epsilon_a = \frac{\mathbf{r}_{ch}}{\|\mathbf{r}_{ch}\|} - \frac{\mathbf{a}_d}{\|\mathbf{a}_d\|},$$

Eq. (11)

where $r_{ch}$ is the vector from the center of the camera to the human in the global frame, and $ad$ is the desired relative viewing orientation, given by

$$\mathbf{a}_d = \big[\sin\theta_d \cos(\psi_d + \psi_h), \quad \sin\theta_d \sin(\psi_d + \psi_h), \quad \cos\theta_d\big]^T,$$

where $\psi_h$ is the current orientation of the human and $\theta_d$ and $\psi_d$ are the desired viewing angles, both specified by the user and different for each drone to observe the human from different view points.

For a given drone, and in a slight abuse of notation, we denote by $x = [xd^0, ... , xd^N]$ and $u = [u^0, ... , u^{N-1}]$ the computed trajectory and inputs, where $u^0$ and $u^0$ are the initial states and drone inputs.

We take a linear combination of the error measures for image location Eq. (9), size Eq. (10) and viewing angle Eq. (11) to de ne a stage cost for trajectory optimization:

$$J_k = a_l c_\mathrm{i}(\mathbf{x}^k_\mathrm{pose}) + a_d c_\mathrm{d}(\mathbf{x}^k_\mathrm{pose}) + a_a c_\mathrm{a}(\mathbf{x}^k_\mathrm{pose}) ,$$

Eq. (12)

where the scalar weight parameters $a_l$, $a_d$, $a_a > 0$ can be set interactively to control the (relative) importance of the different terms. The trajectory and control inputs of the drone at each time step are computed via the solution of the following N-step finite horizon constrained nonlinear optimization problem at the time instant or iteration step t.

$$\min_{\mathbf{x},\mathbf{u}} \quad \sum_{k=0}^{N-1} \left( J_k + \mathbf{u}^{k^T} \mathbf{R} \mathbf{u}^k \right) + a_N J_N$$

(13)

subject to

$$x^0 = \hat{x} \qquad \text{(Initial state)}$$
$$\mathbf{x}^{k+1}_d = f(\mathbf{x}^k_d, \mathbf{u}^k), \qquad \text{(Dynamics)}$$

(continued)

$$\mathbf{x}_d^k \in \mathcal{X},$$ | (State constraints)

$u^k \in U,$ | (Input constraints)
| $\forall\, k \in \{0, \dots, N - 1\}$
$x_d^N \in X,$ | (State constraints)

where $R \in S^{nu+}$ is a positive definite penalty matrix to avoid excessive use of the control inputs. The scalar $a_N > 0$ is a weight parameter used to weight a terminal cost N on the final stage. This is common in finite-horizon schemes to mimic long horizons, approximating the infinite horizon solution. The vector $x^\wedge_d(t)$ denotes the estimated value of the current state $x_d$. Finally, the sets X and U denote the sets of feasible states and inputs for the drone, respectively. These can be derived from physical limits of the environment and by the internal constraints of the flying camera hardware, e.g. bounds on vertical and horizontal velocities as well as on roll and pitch angles. The limits can be obtained from the technical characteristics of the drones 1, 1'. While each quadrotor model has different values of these bounds, in general such bounds exist and can be assumed to be known for a particular model.

Additional constraints for avoiding collisions between the drones 1, 1' and between each drone and the tracked human could also be added. The drone is actuated using the optimal inputs from the first step $u_0$. Importantly, a new trajectory is recomputed at each time-step (iteration step), taking updated sensor data into consideration.

The steps S1 to S7 are repeated in each iteration step to iteratively estimate the current positions of the detection points 5 and of the drones 1, 1', thus to track them over time.

Thus, a method for estimating the pose of a human (or the form of an object) is proposed with an environment-independent approach to multi-view human motion capture that leverages an autonomous swarm of micro aerial vehicles (MAVs), or drones 1, 1'. The drones carry cameras 3 trained on the object of interest, who preferably wears a sparse set of markers. The 2D positions of these markers are extracted from the images and the 3D joint positions of the human skeleton are estimated in real-time. This approach addresses several challenges: First, and in contrast to traditional camera localization approaches that make rigid scene assumptions, the 3D joint locations move in an articulated nonrigid fashion. Second, the cameras move relative to the human and their configuration changes dynamically, which is in contrast to typical human pose estimation approaches where the cameras are assumed to be stationary and calibrated. Third, we do not rely on any external signal, such as GPS for positioning, making our approach applicable both indoors and outdoors. Our method enables motion capture in previously difficult or entirely infeasible scenarios such as continuously reconstructing the full body pose of an athlete throughout an entire workout or capturing actors in remote and difficult to reach locations, for example while climbing.

More concretely we propose a completely self-contained method for the joint estimation and control of the states of multiple MAVs and of 3D human skeletal configuration. The proposed algorithm runs in real-time and accurately estimates the positions of the robot swarm and the human pose parameters. Furthermore, we compute in real-time drone trajectories to keep the cameras trained on the subject and therefore the markers in view of the cameras.

The described method, apparatus and computer program for determining the pose of a human can be used for the applications mentioned in the introduction.

**Claims**

1. Apparatus for detecting the form of a deformable object (4), the apparatus comprising at least two drones (1, 1') and a processing apparatus (2), wherein each of the at least two drones (1, 1') comprises a camera (3) for iteratively capturing in an iteration step an image of the deformable object (4), wherein the processing apparatus (2) is configured to estimate iteratively the form of the deformable object (4) by performing in the iteration step the following the steps:

receiving from the camera (3) of each of the drones (1, 1') an image of the deformable object (4) captured in the current iteration step,
detecting image positions of detection points (5) of the deformable object (4) in each of the received images,
estimating a pose state of the current iteration step based on the image positions of the detection points (5) detected in each of the images received in the current iteration step, wherein the pose state of the current iteration step comprises three-dimensional positions of the detection points (5) in a detection coordinate system (7) in the current iteration step and parameters of the drones (1, 1') and/or of the cameras (3) defining the position and orientation of the cameras (3) in the detection coordinate system (7) in the current iteration step, wherein the three-dimensional positions of the detection points (5) in the current iteration step define the form of the object in the current iteration step, and

controlling the drones (1, 1') based on the pose state of the current iteration step such that the drones (1,1') follow the object (4) and/or such that the cameras (3) of the drones (1,1') keep the object (4) in its images and/or such that the number of detection points (5) visible in the images are maximised.

2. Apparatus according to one of the previous claims, wherein the pose state of the current iteration step is estimated based further on the pose state of a preceding iteration step.

3. Apparatus according to the previous claim, wherein the pose state comprises further the orientations of each drone (1, 1') and/or, if the cameras (3) are movable in the drones (1, 1'), the orientation of the camera (3) of each drone (1, 1') with respect to the respective drone (1, 1').

4. Apparatus according to one of the previous claims, wherein a control state comprises further control parameters of the drones (1, 1') which do not influence the image of the camera (3) of each drone (1, 1'), wherein the control state is estimated based on the control state of the previous state, wherein the control state comprises preferably the velocity of each drone (1, 1'), wherein the drones (1, 1') are further controlled based on the control state of the current iteration step.

5. Apparatus according to one of the previous claims, wherein a distance state comprises a set of distances defining the distances (6) between connected detection points (5), wherein the distance state is estimated based on the pose state of the current or previous state and/or based on the distance state of the previous iteration step.

6. Apparatus according to the previous claim, wherein at least some, preferably all of the distances (6) of the distance state are constant.

7. Apparatus according to one of the previous claims, wherein a state is defined as the pose state, the control state and/or the distance state, wherein the state of the current iteration step is estimated with a Kalman filter based on the state of the previous iteration step.

8. Apparatus according to the previous claim, wherein the pose state is estimated with a first Kalman filter and the distance state and/or control state is estimated with a second Kalman filter and/or third Kalman filter being separate from the first Kalman filter.

9. Apparatus according to claim 8 and one of claims 4 to 7, wherein the pose state and the distance state and/or the control state define a joint state, wherein the joint state of the current iteration step is estimated with a Kalman filter based on the joint state of the previous iteration step.

10. Apparatus according to one of the previous claims, wherein the origin of the detection coordinate system moves with one of the at least two drones (1, 1') or with a point defined by two or more of the at least two drones (1, 1').

11. Apparatus according to the previous claim, wherein one (1') of the at least two drones (1, 1') is defined as a lead drone (1') and the at least one other drone (1) is defined as at least one secondary drone (1), wherein the detection coordinate system corresponds to the coordinate system of the lead drone (1').

12. Apparatus according to the previous claim, wherein the lead drone (1') comprises a sensor for detecting the displacement of the lead drone (1'), wherein the pose state of the previous iteration step is corrected based on the detected displacement of the lead drone (1') to obtain a corrected pose state of the previous iteration step, wherein the pose state of the current iteration step is estimated based on the image positions of the received images of the current iteration and based on the corrected pose state of the previous iteration step.

13. Apparatus according to one of the previous claims, wherein the deformable object is a human, a human-like robot or an animal and/or the form of the object is a pose of the deformable object.

14. Method for detecting the form of a deformable object (4), the method comprising at least two drones (1, 1'), wherein each of the at least two drones (1, 1') comprises a camera (3), wherein the following steps of an iteration step are performed iteratively:

taking, in the camera (3) of each of the drones (1, 1'), an image of the deformable object (4),

sending from the camera (3) of each of the drones (1, 1') an image of the deformable object (4) captured in the current iteration step to the processing apparatus (2),

detecting, in the processing apparatus (2), image positions of detection points (5) of the deformable object (4) in each of the received images,

estimating a pose state of the current iteration step based on the image positions of the detection points (5) detected in each of the images received in the current iteration step, wherein the pose state of the current iteration step comprises three-dimensional positions of the detection points (5) in a detection coordinate system (7) in the current iteration step and parameters of the drones (1, 1') and/or of the cameras (3) defining the position and orientation of the cameras (3) in the detection coordinate system (7) in the current iteration step, wherein the three-dimensional positions of the detection points (5) in the current iteration step define the form of the object in the current iteration step, and

controlling the drones (1, 1') based on the pose state of the current iteration step such that the drones (1,1') follow the object (4) and/or such that the cameras (3) of the drones (1,1') keep the object (4) in its images and/or such that the number of detection points (5) visible in the images are maximised.

15. Computer program comprising instructions configured to perform the step of the method according to the previous claim, when executed on a processing apparatus (2).

Fig. 1

Receive images from drones

S1

Determine image positions of detection point

S2

Receive displacement of lead drone

S3

Determine pose state

S4

Determine control state

S5

Determine distance state

S6

Control the drones

S7

Fig. 2

Europäisches
Patentamt

European
Patent Office

Office européen
des brevets

# EUROPEAN SEARCH REPORT

Application Number

EP 18 19 0587

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/165875 A1 (YU JUNG-JAE [KR] ET AL) 14 June 2018 (2018-06-14) | 1-4, 7-11, 13-15 | INV. G06T7/55 |
| Y | * abstract; figure 1 * | 5,6 | |
| A | * paragraphs [0047], [0052], [0054], [0081] - [0086] * | 12 | |
| | ----- | | |
| Y | HUANG CHONG ET AL: "ACT: An Autonomous Drone Cinematography System for Action Scenes", 2018 IEEE INTERNATIONAL CONFERENCE ON ROBOTICS AND AUTOMATION (ICRA), IEEE, 21 May 2018 (2018-05-21), pages 7039-7046, XP033403218, DOI: 10.1109/ICRA.2018.8460703 [retrieved on 2018-09-10] * abstract; figures 2,6,7 * * section III * | 5,6 | |
| | ----- | | |
| X | US 2017/243346 A1 (HALL BRADLEY RICHARD [US] ET AL) 24 August 2017 (2017-08-24) * paragraphs [0009], [0019], [0026], [0028], [0036], [0037], [0043], [0050], [0058], [0060], [0069], [0071], [0073]; figures 1C,3A,3B * | 1,14,15 | |
| | ----- | | **TECHNICAL FIELDS SEARCHED (IPC)** |
| A | QUENTIN GALVANE ET AL: "Directing Cinematographic Drones", ACM TRANSACTIONS ON GRAPHICS (TOG), vol. 37, no. 3, 27 July 2018 (2018-07-27), pages 1-18, XP055536687, US ISSN: 0730-0301, DOI: 10.1145/3181975 * abstract; figure 1 * * section 7 * | 1-15 | G06T |
| | ----- | | |

The present search report has been drawn up for all claims

| Place of search | Date of completion of the search | Examiner |
|---|---|---|
| Munich | 20 December 2018 | Krawczyk, Grzegorz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 19 0587

This annex lists the patent family members relating to the patent documents cited in  the above-mentioned European search report.
The members are as contained in the European Patent Office EDP file on
The European Patent Office is in no way liable for these particulars which are merely given for the purpose of information.

20-12-2018

| Patent document cited in search report | | Publication date | Patent family member(s) | | Publication date |
|---|---|---|---|---|---|
| US 2018165875 | A1 | 14-06-2018 | KR 20180067908 A | | 21-06-2018 |
| | | | US 2018165875 A1 | | 14-06-2018 |
| US 2017243346 | A1 | 24-08-2017 | US 2017243346 A1 | | 24-08-2017 |
| | | | WO 2017147403 A1 | | 31-08-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RUI LI ; MINJIAN PANG ; CONG ZHAO ; GUYUE ZHOU ; LU FANG.** Monocular long-term target following on uavs. *Proceedings of the IEEE Conference on Computer Vision and Pattern Recognition Workshops,* 2016, 29-37